# EUROPEAN PATENT SPECIFICATION

(11) **EP 3 735 029 B1**
(45) Date of publication and mention of the grant of the patent: **30.08.2023**
(21) Application number: 18893745.2
(22) Date of filing: 05.12.2018
(51) Int. Cl.: H04W 76/12, H04W 76/10, H04W 92/24, H04W 88/14

(54) **METHODS AND DEVICES FOR ESTABLISHING CONTROL PLANE SESSION**
VERFAHREN UND VORRICHTUNGEN ZUM EINRICHTEN EINER KONTROLLEBENE-SITZUNG
PROCÉDÉS ET DISPOSITIFS D'ÉTABLISSEMENT DE SESSION DE PLAN DE COMMANDE

(30) Priority: 25.12.2017 CN 201711421335
(43) Date of publication of application: 04.11.2020
(73) Proprietor: Datang Mobile Communications Equipment Co., Ltd., Beijing 100085 (CN)
(72) Inventor: DENG, Qiang, Beijing 100191 (CN); TANG, Tingfang, Beijing 100191 (CN)
(74) Representative: Cabinet Nony
(86) International application number: PCT/CN2018/119418
(87) International publication number: WO 2019/128666

(56) References cited:
- WO-A1-2017/151437
- CN-A- 106 941 477
- CN-A- 107 018 542
- "3rd Generation Partnership Project; Technical Specification Group Radio Access Network; NR; NR and NG-RAN Overall Description; Stage 2 (Release 15)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V2.0.0, 12 December 2017 (2017-12-12), pages 1-68, XP051391908, [retrieved on 2017-12-12]
- "3rd Generation Partnership Project; Technical Specification Group Core Network and Terminals; Non-Access-Stratum (NAS) protocol for Evolved Packet System (EPS); Stage 3 (Release 14)", 3GPP STANDARD ; TECHNICAL SPECIFICATION ; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V14.5.0, 22 September 2017 (2017-09-22), pages 1-489, XP051337139, [retrieved on 2017-09-22]
- ANONYMOUS: "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 22 December 2017 (2017-12-22), pages 1-181, XP051392101, [retrieved on 2017-12-22]
- 3GPP: "3rd Generation Partnership Project; Technical Specification Group Radio Access Network; NR; NR and NG-RAN Overall Description; Stage 2 (Release 15)", 3rd Generation 3GPP TS 38. 300 V.1.0.0, 1 September 2017 (2017-09-01), pages 1-59, XP055623482,

## Description

The present application claims priority to Chinese Patent Application No. 201711421335.0, filed with the Chinese Patent Office on December 25, 2017 and entitled "Method and Device for Establishing Session".

### Field

The invention relates to the field of communications technologies, and particularly to methods, an access and mobility management function entity, a session management function entity and a user equipment for establishing a session.

### Background

In order to support the small data transmission of water meters, electricity meters, and other CIoT (Cellular Internet of Things) applications, the 3GPP (3rd Generation Partnership Project) defines a data transmission method of control plane (control plane session) in R13, where the data is transmitted between a user equipment and an MME (Mobility Management Entity) through an NAS (Non Access Stratum) message without establishing the air interface DRB (Data Radio Bearer) and S1- U connection.

Compared with the 4G network architecture, the 5G network architecture has significant changes, mainly in: (1) the network architecture based on service interfaces, there are service interfaces among the control plane network elements in the 5G core network, for example, a service interface is between the AMF (Access and Mobility Management Function) and SMF (Session Management Function); (2) the MM (Mobility Management) and SM (Session Management) are separated, where the AMF is responsible for MM function, and the SMF is responsible for SM function; (3) the CP (Control Plane) and UP (User Plane) are separated, where the User Plane Function (UPF) is the User Plane (UP) network element, and the AMF/SMF and the like are the Control Plane (CP) network elements. R15 defines the 5G basic structure and process, including the PDU Session (Protocol Data Unit Session) establishment process used to establish a user plane connection between a user equipment and a network, but the existing PDU session establishment process does not support establishing a control plane PDU (Control Plane Protocol Data Unit) session.

In summary, the method for establishing the session data transmission of the control plane in the 4G network in the prior art is not applicable to the 5G network.

The article entitled "3rd Generation Partnership Project; Technical Specification Group Radio Access Network; NR; NR and NG-RAN Overall Description; Stage 2 (Release 15)", 3GPP TS 38.300 V2.0.0 (2017-12), provides an overview and overall description of the NG-RAN and focuses on the radio interface protocol architecture of NR connected to 5GC (E-UTRA connected to 5GC is covered in the 36 series). Details of the radio interface protocols are specified in companion specifications of the 38 series.

The article entitled "3rd Generation Partnership Project; Technical Specification Group Core Network and Terminals; Non-Access-Stratum (NAS) protocol for Evolved Packet System (EPS); Stage 3 (Release 14)", 3GPP TS 24.301 V14.5.0 (2017-09), specifies the procedures used by the protocols for mobility management and session management between User Equipment (UE) and Mobility Management Entity (MME) in the Evolved Packet System (EPS). These protocols belong to the non-access stratum (NAS).

The EPS Mobility Management (EMM) protocol defined in the present document provides procedures for the control of mobility when the User Equipment (UE) is using the Evolved UMTS Terrestrial Radio Access Network (E-UTRAN). The EMM protocol also provides control of security for the NAS protocols.

The EPS Session Management (ESM) protocol defined in the present document provides procedures for the handling of EPS bearer contexts. Together with the bearer control provided by the access stratum, this protocol is used for the control of user plane bearers.

For both NAS protocols the present document specifies procedures for the support of inter-system mobility between E UTRAN and other 3GPP or non-3GPP access networks:
For inter-system mobility between E-UTRAN and GERAN or UTRAN, this includes rules for a mapping between parameters and procedures used by the NAS protocols defined in the present document and the NAS protocols specified in 3GPP TS 24.008 [13].
For inter-system mobility between E-UTRAN and generic non-3GPP access networks, this includes specific NAS procedures to maintain IP connectivity to the PDN Gateway and to provide parameters needed by the UE when using mobility management based on Dual-Stack Mobile IPv6 (see 3GPP TS 24.303 [14]) or MIPv4 (see 3GPP TS 24.304 [15]).

This article is applicable to the UE and to the Mobility Management Entity (MME) in the EPS.

This article is also applicable to the relay node in the EPS (see 3GPP TS 23.401 [10]).

This article also specifies NAS signalling enhancement for the support of efficient transport of IP, non-IP and SMS data of CIoT capable devices.

The article entitled "3rd Generation Partnership Project; Technical Specification Group Services and System Aspects; System Architecture for the 5G System; Stage 2 (Release 15)", 3GPP TS 23.501 V15.0.0 (2017-12), defines the Stage 2 system architecture for the 5G System. The 5G System provides data connectivity and services.

This specification covers both roaming and non-roaming scenarios in all aspects, including interworking between 5GS and EPS, mobility within 5GS, policy control and charging, and authentication.

ITU T Recommendation I.130 [11] describes a three-stage method for characterisation of telecommunication services, and ITU T Recommendation Q.65 [12] defines Stage 2 of the method.

WO2017/151437A1 patent application discloses that technology for Internet of Things (CIoT) data transfer via a mobility management entity within a wireless communication network. A user equipment (UE) can include processors configured to encapsulate user data in an information element into an evolved packet system (EPS) session management (ESM) data 5 transport message to transfer the user data via the control plane to a mobility management entity (MME). An EPS bearer identity associated with the user data in the ESM data transport message can be included with the ESM data transport message. The ESM data transport message can be encoded for transmission to the MME via the control plane. The MME can identify a 10 PDN connection associated with the EPS bearer ID and forward the user data based on the EPS bearer ID.

### Summary

The invention provides methods, an access and mobility management function entity, a session management function entity and a user equipment for establishing a session, so as to solve the problem that the method for establishing the session data transmission of the control plane in the 4G network in the prior art is not applicable to the 5G network. The present invention is defined by the appended independent claims. Specific embodiments are defined in the dependent claims.

In the embodiments of the invention, after receiving the session establishment request sent by the user equipment, the access and mobility management function entity instructs the session management function entity to establish the control plane session for the user equipment, and the session management function entity instructs the tunnel information of downlink data transmission to the user plane function entity. When the data needs to be transmitted, the data transmission is performed between the access and mobility management function entity and the user equipment through the NAS message. In the invention, when the data needs to be transmitted, the data transmission is performed between the access and mobility management function entity and the user equipment through the NAS message, so it is suitable for the transmission of the control plane data in the 5G network.

### Brief Description of the Drawings

In order to illustrate the embodiments of the invention more clearly, the accompanying figures which need to be used in describing the embodiments will be introduced below briefly. The figures described below are only some embodiments of the invention.
Fig. 1 is a schematic structural diagram of a system according to an embodiment of the invention;
Fig. 2 is a schematic diagram of the 5G network architecture;
Fig. 3 is a schematic structural diagram of an access and mobility management function entity useful for understanding the invention but not being part of the invention;
Fig. 4 is a schematic structural diagram of a session management function entity useful for understanding the invention but not being part of the invention;
Fig. 5 is a schematic structural diagram of a user equipment useful for understanding the invention but not being part of the invention;
Fig. 6 is a schematic structural diagram of another access and mobility management function entity according to an embodiment of the invention;
Fig. 7 is a schematic structural diagram of another session management function entity according to an embodiment of the invention;
Fig. 8 is a schematic structural diagram of another user equipment according to an embodiment of the invention.
Fig. 9 is a schematic flow diagram of a method at the access and mobility management function entity side according to an embodiment of the invention;
Fig. 10 is a schematic flow diagram of a method at the session management function entity side according to an embodiment of the invention;
Fig. 11 is a schematic flow diagram of a method at the session user equipment side according to an embodiment of the invention;
Fig. 12 is a schematic diagram of a complete flow of data transmission between an access and mobility management function entity and a user equipment through a mobile session management message of non access stratum useful for understanding the invention but not being part of the inventioon;
Fig. 13 is a schematic diagram of a complete process of downlink data transmission between an access and mobility management function entity and a user equipment useful for understanding the invention but not being part of the invention;
Fig. 14 is a schematic diagram of a complete flow of data transmission between an access and mobility management function entity and a user equipment through a mobile session management message of non access stratum useful for understanding the invention but not being part of the invention; and
Fig. 15 is a schematic diagram of a complete process of downlink data transmission between an session management function entity and a user equipment useful for understanding the invention but not being part of the invention.

### Detailed Description

In order to make the objects, technical solutions and advantages of the invention clearer, the invention will be further illustrated below in details with reference to the accompanying drawings.

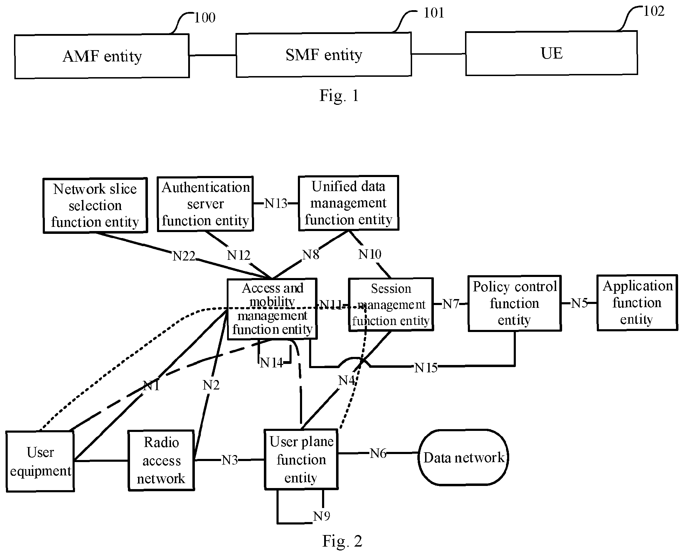

As shown in Fig. 1, a session establishment system according to an embodiment of the invention includes an access and mobility management function entity 100 and a session management function entity 101.

The access and mobility management function entity 100 is configured to receive a session establishment request sent by a user equipment; determine to establish a control plane session for the user equipment; instruct the session management function entity to establish the control plane session for the user equipment; and perform the data transmission with the user equipment through a non access stratum message.

The session management function entity 101 is configured to receive a session establishment request sent by a user equipment; receive the instruction information of establishing a control plane session for the user equipment sent by the access and mobility management function entity; and instructs the tunnel information of downlink data transmission to a user plane function entity.

The user equipment 102 is configured to send a session establishment request to the access and mobility management function entity; establish a control plane session with the access and mobility management function entity; and perform the data transmission with the access and mobility management function entity through the control plane session.

In the embodiments of the invention, after receiving the session establishment request sent by the user equipment, the access and mobility management function entity instructs the session management function entity to establish the control plane session for the user equipment, and the session management function entity instructs the tunnel information of downlink data transmission to the user plane function entity. When the data needs to be transmitted, the data is transmitted between the access and mobility management function entity and the user equipment through the non access stratum message. In the invention, when the data needs to be transmitted, the data transmission is performed between the access and mobility management function entity and the user equipment through the non access stratum message, so it is suitable for the transmission of the control plane data in the 5G network.

As shown in Fig. 2, based on the 5G network architecture, the embodiments of the invention provide two methods for establishing the data transmission of the control plane session. One method is to perform the data transmission between the access and mobility management function entity and the user equipment through NAS mobility management message, and the other method is to perform the data transmission between the access and mobility management function entity and the user equipment through NAS session management message.
1. The data transmission between the access and mobility management function entity and the user equipment through NAS mobility management message.

When the user equipment needs to establish a session, the user equipment sends a session establishment request to the access and mobility management function entity, wherein the session establishment request is in an NAS message.

Correspondingly, after receiving the session establishment request sent by the user equipment, the access and mobility management function entity determines a type of the session to be control plane session according to the negotiation result with the user equipment in the registration process of the user equipment, and instructs to the session management function entity to establish a control plane session for the user equipment and the tunnel information of the access and mobility management function entity.

Here, the tunnel information of the access and mobility management function entity is used by the user plane function entity to send the downlink data to the mobility management function entity.

Correspondingly, after receiving the instruction information of establishing the control plane session for the user equipment sent by the access and mobility management function entity and the tunnel information of the access and mobility management function entity, the session management function entity instructs the tunnel information, provided by the access and mobility management function entity and for the downlink data transmission, to the user plane function entity.

After the user plane function entity returns an instruction receiving response, the session management function entity instructs the service quality information of the session to the access and mobility management function entity.

Correspondingly, the access and mobility management function entity receives the service quality information of the session from the session management function entity, wherein the service quality information of the session includes the tunnel information of the user plane function entity.

It should be noted that the tunnel information of the user plane function entity, sent by the session management function entity to the access and mobility management function entity, may be allocated by the session management function entity itself, or may be allocated by the user plane function entity. If the tunnel information of the user plane function entity is allocated by the user plane function entity, the user plane function entity needs to put the tunnel information of the user plane function entity in the instruction receiving response to provide to the session management function entity.

The access and mobility management function entity sends an NAS access message to the user equipment, and correspondingly, the user equipment sends an NAS confirmation message to the access and mobility management function entity after receiving an NAS response message sent by the access and mobility management function entity.

In this way, the establishment of the control plane session is completed, and the data transmission is performed between the access and mobility management function entity and the user equipment through the NAS mobility management message.

If the user equipment is in the idle state, when the downlink data arrives at the user plane function entity, the session management function entity determines the type of the session to be control plane session according to the session context information of the user equipment, and instructs, to the access and mobility management function entity, the tunnel information of the user plane function entity corresponding to the session.

After receiving the tunnel information of the user plane function entity, the access and mobility management function entity sends its own tunnel information to the session management function entity, and the session management function entity forwards the tunnel information of the access and mobility management function entity to the user plane function entity. The downlink data may be sent to the access and mobility management function entity, and the access and mobility management function entity sends the downlink data to the user equipment through the NAS message.

2. The data transmission between the access and mobility management function entity and the user equipment through an NAS session management message.

When the user equipment needs to establish a session, the user equipment sends a session establishment request to the access and mobility management function entity, wherein the session establishment request is in the NAS message.

Correspondingly, after receiving the session establishment request sent by the user equipment, the access and mobility management function entity determines the type of the session to be control plane session according to the negotiation result with the user equipment in the registration process of the user equipment, and instructs to the session management function entity to establish a control plane session for the user equipment.

Correspondingly, after receiving the instruction information of establishing the control plane session for the user equipment sent by the access and mobility management function entity, the session management function entity instructs the tunnel information, provided by the session management function entity and for the downlink data transmission, to the user plane function entity.

Correspondingly, the access and mobility management function entity receives the service quality information of the session from the session management function entity.

It should be noted that, if the tunnel information of the user plane function entity is allocated by the user plane function entity, the user plane function entity needs to provide the tunnel information of the user plane function entity to the session management function entity.

Correspondingly, after the control plane session is established, the data transmission is performed between the access and mobility management function entity and the user equipment through the NAS session management message, and the data transmission is performed between the access and mobility management function entity and the user plane function entity through the tunnel information.

The access and mobility management function entity sends an NAS access message to the user equipment, and correspondingly, the user equipment sends an NAS confirmation message to the access and mobility management function entity after receiving an NAS response message sent by the access and mobility management function entity.

In this way, the establishment of the control plane session is completed, the data transmission is performed between the access and mobility management function entity and the user equipment through the NAS session management message, and the transmission of the NAS session management message is performed between the access and mobility management function entity and the session management function entity.

If the user equipment is in the idle state, when the downlink data arrives at the user plane function entity, the session management function entity determines the type of the session to be control plane session according to the session context information of the user equipment, and instructs the tunnel information of the session management function entity to the user plane function entity. The downlink data may be sent to the session management function entity.

The session management function entity sends the downlink data to the access and mobility management function entity, and the access and mobility management function entity sends the downlink data to the user equipment through the NAS message.

The following embodiments of the invention describe the two methods for establishing the data transmission of the control plane session described above in detail.
1. The data transmission between the access and mobility management function entity and the user equipment through an NAS session management message.

The user equipment sends, to the access and mobility management function entity, an NAS request for establishing a PDU session, wherein the NAS request includes an ID (identification) used to establish the PDU session and allocated by the user equipment and the PDU session establishment request.

Correspondingly, after receiving the NAS request from the user equipment, the access and mobility management function entity determines that the NAS request is a message of creating a new PDU session, judges whether a control plane session needs to be established for the user equipment according the negotiation result with the user equipment in the user equipment registration process, and establishes a control plane session for the user equipment if the negotiation result is Control Plane CIoT EPS optimisation.

After the access and mobility management function determines to establish the control plane session for the user equipment, a request service message of the session management function is sent to the session management function entity.

Here, the request service message of the session management function includes the ID of the access and mobility management function, the ID used to establish a PDU session, the PDU session establishment request, the instruction information for establishing a control plane session, and the tunnel information of the access and mobility management function entity, the tunnel information the access and mobility management function entity is used by the user plane function entity to send the downlink data to the access and mobility management function entity.

Correspondingly, after receiving the request service message of the session management function, the session management function entity requests a UDM (Unified Data Management) service and obtains the relevant subscription information of the PDU session from the UDM entity; and the session management function entity requests a PCF (Policy Control Function) service and obtains the relevant PCC rule of the PDU session from the PCF.

After obtaining the relevant subscription information and relevant PCC rule of the PDU session, the session management function entity puts the tunnel information of the access and mobility management function entity and the packet detection and other rules in an N4 session establishment request and sends to the selected user plane function entity.

After receiving an N4 session establishment response sent by the user plane function entity, the session management function entity put the tunnel information of the user plane function entity, the PDU session ID and the PDU session establishment response in the service quality information of the session to send to the access and mobility management function entity, wherein the tunnel information of the user plane function entity is used by the access and mobility management function entity to send the uplink data to the user plane function entity.

The access and mobility management function entity needs to perform the QoS (Quality of Service) configuration when establishing the session, but the access and mobility management function entity has not known the configuration parameters of the QoS configuration, which need to be provided by the session management function entity, so the session establishment response further includes the configuration parameters of the QoS configuration.

Correspondingly, the access and mobility management function entity sends an N2 request message to an RAN (Radio Access Network), wherein the N2 request message includes the NAS message (i.e., the PDU session ID and the PDU session establishment response).

After receiving the N2 request message sent by the access and mobility management function entity, the RAN sends the NAS message in the N2 request message to the user equipment through an RRC message.

After receiving the NAS message (information) sent by the RAN, the user equipment entity returns a NAS message of the PDU session establishment response to the RAN through an RRC (Radio Resource Control) message, and in this way, the user equipment completes the establishment of the control plane session.

Correspondingly, after the control plane session is established, the data transmission is performed between the access and mobility management function entity and the user equipment through the NAS mobility management message.
1). The user equipment is in the idle state, and when the downlink data arrives at the user plane function entity.

When the user plane function of the user plane function entity finds no path for sending the downlink data, the user plane function entity sends a data notification request to the session management function entity, where this notification request includes the PDU session ID.

Correspondingly, after receiving the data notification request, the session management function entity determines the type of the session to be control plane session according to the session context information of the user equipment, and sends the service request message of the access and mobility management function entity to the access and mobility management function entity, wherein the service request message of the access and mobility management function entity includes the PDU session ID and the tunnel information of the user plane function entity.

Correspondingly, after receiving the service request message of the access and mobility management function, the access and mobility management function entity puts the tunnel information of the access and mobility management function entity in the service request message of the session management function entity and sends to the session management function entity.

After receiving the tunnel information of the access and mobility management function entity sent by the access and mobility management function entity, the access and mobility management function entity sends the tunnel information of the access and mobility management function entity to the user plane function entity through a downlink data message of N4 session.

Correspondingly, the user plane function entity sends the received downlink data to the access and mobility management function entity through the tunnel information of the session management function entity, and the access and mobility management function entity sends a paging to the user equipment through the RAN after receiving the downlink data sent by the user plane function entity.

The user equipment sends a control plane session request to the RAN through an RRC message after receiving the paging sent from the RAN, the RAN sends the control plane session request to the access and mobility management function entity, and a connection is established between the user equipment and the access and mobility management function entity.

Correspondingly, the access and mobility management function entity performs data encryption and integrity protection on the downlink data, and sends the downlink data to the user equipment.

It should be noted here that, the step in which the access and mobility management function entity sends the service request message of the session management function entity to the session management function entity and the step in which the user plane function entity sends the received downlink data to the access and mobility management function entity through the tunnel information of the access and mobility management function entity may be performed after the connection is established between the user equipment and the access and mobility management function entity.

2. When the tunnel information for sending the downlink data is the tunnel information of the access and mobility management function entity.

The user equipment sends the NAS request of establishing a PDU session to the access and mobility management function entity, wherein the NAS request includes an ID used to establish the PDU session and allocated by the user equipment and the PDU session establishment request.

Correspondingly, after receiving the NAS request from the user equipment, the access and mobility management function entity determines the NAS request is a message of creating a new PDU session, judges whether a control plane session needs to be established for the user equipment according the negotiation result with the user equipment in the user equipment registration process, and establishes a control plane session for the user equipment if the negotiation result is Control Plane CIoT EPS optimisation.

After the access and mobility management function determines to establish a control plane session for the user equipment, the access and mobility management function entity sends a request service message of the session management function to the session management function entity, wherein the request service message of the session management function entity includes the ID of the access and mobility management function, the ID used to establish a PDU session, the PDU session establishment request, and the instruction information of establishing a control plane session.

Correspondingly, after receiving the request service message of the session management function, the session management function entity requests a UDM service and obtains the relevant subscription information of the PDU session from the UDM entity; and the session management function entity requests a PCF service and obtains the relevant PCC rule of the PDU session from the PCF.

After obtaining the relevant subscription information and relevant PCC rule of the PDU session, the session management function entity puts the tunnel information of the access and mobility management function entity and the packet detection and other rules in the establishment request of N4 session for sending to the selected user plane function entity.

After the session management function entity receives the establishment response of N4 session sent by the user plane function entity, the PDU session ID and the establishment response of the PDU session are put in the request service response of the access and mobility management function to be sent to the access and mobility management function entity.

Correspondingly, the access and mobility management function entity sends an N2 request to the RAN, wherein the N2 request includes the NAS message (i.e., the PDU session ID and the establishment response of the PDU session).

After receiving the N2 request sent by the access and mobility management function entity, the RAN sends the NAS message in the N2 request to the user equipment through an RRC message.

After receiving the NAS message sent by the RAN, the user equipment entity returns an NAS response of establishing a PDU session to the RAN through an RRC message, and in this way, the establishment of the control plane session is completed.

When the control plane of the user plane function entity needs to send the data to the user equipment, the user plane function entity sends the data to the access and mobility management function entity through the tunnel information of the access and mobility management function entity, and the access and mobility management function entity sends the data to the user equipment.
1). The user equipment is in the idle state, and when the downlink data arrives at the user plane function entity.

When the user plane function of the user plane function entity finds no downlink data path, the user plane function entity sends a data notification request to the session management function entity, where this notification request includes the PDU session ID.

Correspondingly, after receiving the data notification request, the session management function entity determines the session type to be control plane session according to the session context information of the user equipment, and sends the tunnel information of the access and mobility management function entity to the user plane function entity through the downlink data of the N4 session.

Correspondingly, after receiving the service request message of the access and mobility management function, the access and mobility management function entity puts the tunnel information of the access and mobility management function entity in the service request message of the access and mobility management function entity and sends to the session management function entity.

After receiving the tunnel information of the access and mobility management function entity sent by the access and mobility management function entity, the session management function entity sends the tunnel information of the access and mobility management function entity to the user plane function entity.

Correspondingly, after receiving the downlink data sent by the user plane function entity through the tunnel information of the access and mobility management function entity, the access and mobility management function entity puts the downlink data in the service request of the access and mobility management function entity and sends to the access and mobility management function entity.

After receiving the downlink data sent by the user plane function entity, the access and mobility management function entity sends a paging to the user equipment through the RNA.

The user equipment sends a control plane session request to the RNA through an RRC message after receiving the paging sent from the RNA, the RNA sends the control plane session request to the access and mobility management function entity, and a connection is established between the user equipment and the access and mobility management function entity.

Correspondingly, the access and mobility management function entity encrypts the received downlink data and protects its integrity, and sends the downlink data to the user equipment.

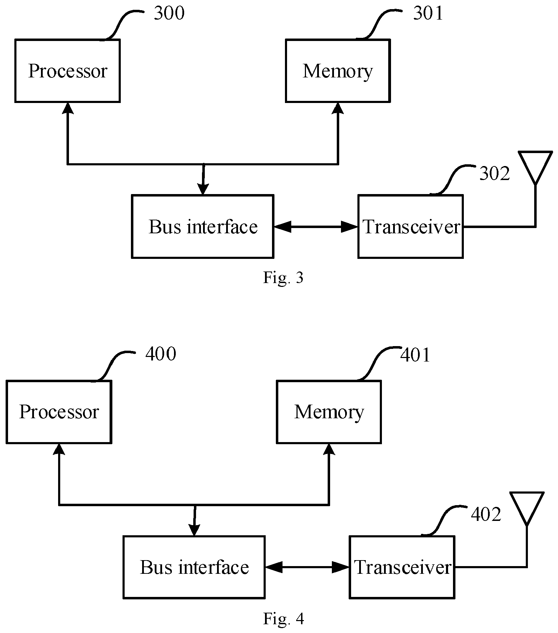

The embodiment illustrated in Fig. 3 is not covered by the subject-matter of the claims. As shown in Fig. 3, an embodiment of the invention provides an access and mobility management function entity for establishing a session, which includes a processor 300, a memory 301, and a transceiver 302.

The processor 300 is configured to read the program in the memory 301 and perform: receiving a session establishment request sent by a user equipment; determining to establish a control plane session for the user equipment; instructing a session management function entity to establish the control plane session for the user equipment; and performing the data transmission with the user equipment through an NAS message.

According to the invention, the processor 300 is configured to: negotiate with the user equipment to determine the session type to be control plane session in the registration process.

Optionally, the processor 300 is further configured to: instruct the tunnel information of the access and mobility management function entity to the session management function entity.

Optionally, the tunnel information of the access and mobility management function entity is used by a user plane function entity to send the downlink data to the access and mobility management function entity.

Optionally, the processor 300 is further configured to: receive the tunnel information of the user plane function entity instructed by the session management function entity.

Optionally, the tunnel information of the user plane function entity is used by the access and mobility management function entity to send the uplink data to the user plane function entity.

Optionally, the processor 300 is further configured to: receive the service quality information of the session instructed by the session management function entity.

Optionally, the processor 300 is configured to: perform the data transmission with the user equipment through an NAS mobility management message.

Optionally, the processor 300 is further configured to: perform the data transmission with the user plane function entity through the tunnel information.

Optionally, the processor 300 is configured to: perform the data transmission with the user equipment through an NAS session management message.

Optionally, the processor 300 is further configured to: perform the transmission of the NAS session management message with the session management function entity.

The processor 300 is responsible for managing the bus architecture and general processing, and the memory 301 may store the data used by the processor 300 when performing the operations. The transceiver 302 is configured to receive and send the data under the control of the processor 300.

The bus architecture may include any numbers of interconnected buses and bridges, and specifically link various circuits of one or more processors represented by the processor 300 and the memory represented by the memory 301. The bus architecture may further link various other circuits such as peripheral device, voltage regulator and power management circuit, which are all well known in the art and thus will not be further described again herein. The bus interface provides an interface. The processor 300 is responsible for managing the bus architecture and general processing, and the memory 301 may store the data used by the processor 300 when performing the operations.

The procedure disclosed by the embodiment of the invention may be applied in the processor 300 or implemented by the processor 300. In the implementation process, each step of the signal processing flow may be completed by the integrated logic circuit of hardware in the processor 300 or the instruction in the form of software. The processor 300 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the invention. The general-purpose processor may be a microprocessor or any conventional processor or the like. The steps of the method disclosed in combination with the embodiments of the invention may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 301, and the processor 300 reads the information in the memory 301 and completes the steps of the signal processing flow in combination with its hardware.

The embodiment illustrated in Fig. 4 is not covered by the subject-matter of the claims. As shown in Fig. 4, an embodiment of the invention provides a session management function entity for establishing a session, which includes a processor 400, a memory 401, and a transceiver 402.

The processor 400 is configured to read the program in the memory 401 and perform: receiving a session establishment request sent by a user equipment; receiving the instruction information of establishing a control plane session for the user equipment sent by an access and mobility management function entity; and instructing the tunnel information of downlink data transmission to a user plane function entity.

Optionally, the processor 400 is further configured to: receive the tunnel information of the access and mobility management function entity sent by the access and mobility management function entity.

Optionally, the tunnel information of downlink data transmission is the tunnel information of the access and mobility management function entity, or the tunnel information of the session management function entity.

Optionally, the processor 400 is further configured to: instruct the service quality information of the session to the access and mobility management function entity.

Optionally, the processor is further configured to: instruct the tunnel information of the user plane function entity to the access and mobility management function entity.

Optionally, the processor 400 is further configured to: determine the session type to be control plane session according to the session context information of the user equipment.

Optionally, the processor 400 is configured to: instruct the tunnel information of the user plane function entity corresponding to the session to the access and mobility management function entity.

Optionally, the processor 400 is configured to: perform the data transmission with the user equipment through an NAS session management message.

Optionally, the processor 400 is further configured to: perform the data transmission with the user plane function entity through the tunnel information.

The bus architecture may include any numbers of interconnected buses and bridges, and specifically link various circuits of one or more processors represented by the processor 400 and the memory represented by the memory 401. The bus architecture may further link various other circuits such as peripheral device, voltage regulator and power management circuit, which are all well known in the art and thus will not be further described again herein. The bus interface provides an interface. The processor 400 is responsible for managing the bus architecture and general processing, and the memory 401 may store the data used by the processor 400 when performing the operations.

The procedure disclosed by the embodiment of the invention may be applied in the processor 400 or implemented by the processor 400. In the implementation process, each step of the signal processing flow may be completed by the integrated logic circuit of hardware in the processor 400 or the instruction in the form of software. The processor 400 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the invention. The general-purpose processor may be a microprocessor or any conventional processor or the like. The steps of the method disclosed in combination with the embodiments of the invention may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 401, and the processor 400 reads the information in the memory 401 and completes the steps of the signal processing flow in combination with its hardware.

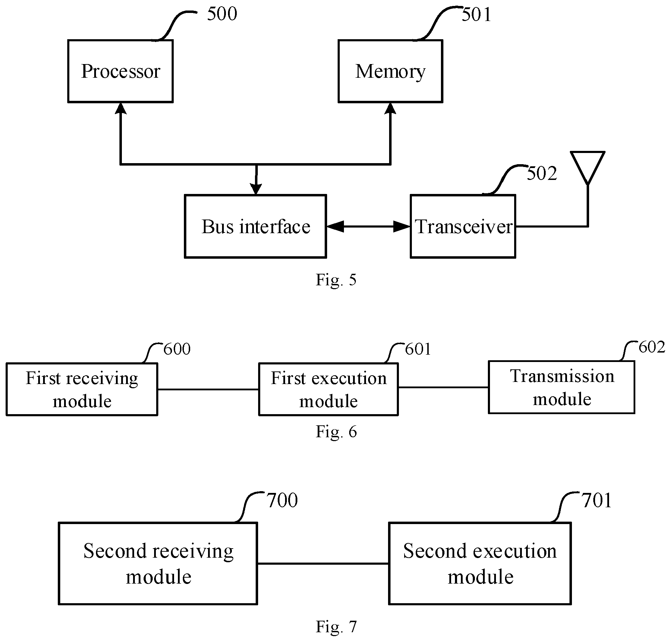

The embodiment illustrated in Fig.5 is not covered by the subject-matter of the claims. As shown in Fig. 5, an embodiment of the invention provides a user equipment for establishing a session. The user equipment includes a processor 500, a memory 501 and a transceiver 502, wherein the processor 500 is configured to read the program in the memory and perform: sending a session establishment request to an access and mobility management function entity; establishing a control plane session with the access and mobility management function entity; and performing the data transmission with the access and mobility management function entity through the control plane session.

Optionally, the processor 500 is configured to: negotiate with the access and mobility management function entity to determine the session type to be control plane session in the registration process before sending the session establishment request to the access and mobility management function entity.

Optionally, the processor 500 is configured to: send an NAS confirmation message to the access and mobility management function entity after receiving an NAS response message sent by the access and mobility management function entity.

Optionally, the processor 500 is configured to: perform the data transmission with the access and mobility management function entity through an NAS mobility management message.

Optionally, the processor 500 is configured to: perform the data transmission with the access and mobility management function entity through an NAS session management message.

The bus architecture may include any numbers of interconnected buses and bridges, and specifically link various circuits of one or more processors represented by the processor 500 and the memory represented by the memory 501. The bus architecture may further link various other circuits such as peripheral device, voltage regulator and power management circuit, which are all well known in the art and thus will not be further described again herein. The bus interface provides an interface. The processor 500 is responsible for managing the bus architecture and general processing, and the memory 501 may store the data used by the processor 500 when performing the operations.

The procedure disclosed by the embodiment of the invention may be applied in the processor 500 or implemented by the processor 500. In the implementation process, each step of the signal processing flow may be completed by the integrated logic circuit of hardware in the processor 500 or the instruction in the form of software. The processor 500 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the invention. The general-purpose processor may be a microprocessor or any conventional processor or the like. The steps of the method disclosed in combination with the embodiments of the invention may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 501, and the processor 500 reads the information in the memory 501 and completes the steps of the signal processing flow in combination with its hardware.

As shown in Fig. 6, an embodiment of the invention provides an access and mobility management function entity for establishing a session, which includes: a first receiving module 600 configured to receive a session establishment request sent by a user equipment; a first execution module 601 configured to determine to establish a control plane session for the user equipment, and instruct a session management function entity to establish the control plane session for the user equipment; and a transmission module 602 configured to perform the data transmission with the user equipment through an NAS message.

According to the invention, the first execution module 601 is further configured to: negotiate with the user equipment to determine the session type to be control plane session in the registration process.

Optionally, the first execution module 601 is further configured to: instruct the tunnel information of the access and mobility management function entity to the session management function entity.

Optionally, the tunnel information of the access and mobility management function entity is used by a user plane function entity to send the downlink data to the access and mobility management function entity.

Optionally, the first receiving module 600 is further configured to: receive the tunnel information of the user plane function entity instructed by the session management function entity.

Optionally, the tunnel information of the user plane function entity is used by the access and mobility management function entity to send the uplink data to the user plane function entity.

Optionally, the first receiving module 600 is further configured to: receive the service quality information of the session instructed by the session management function entity.

Optionally, the transmission module 602 is configured to: perform the data transmission with the user equipment through an NAS mobility management message.

Optionally, the transmission module 602 is further configured to: perform the data transmission with the user plane function entity through the tunnel information.

Optionally, the transmission module 602 is configured to: perform the data transmission with the user equipment through an NAS session management message.

Optionally, the transmission module 602 is further configured to: perform the transmission of the NAS session management message with the session management function entity.

As shown in Fig. 7, an embodiment of the invention provides a session management function entity for establishing a session, which includes: a second receiving module 700 configured to receive a session establishment request sent by a user equipment, and receive the instruction information of establishing a control plane session for the user equipment sent by an access and mobility management function entity; and a second execution module 701 configured to instruct the tunnel information of downlink data transmission to a user plane function entity.

Optionally, the second receiving module 700 is further configured to: receive the tunnel information of the access and mobility management function entity sent by the access and mobility management function entity.

Optionally, the tunnel information of downlink data transmission is the tunnel information of the access and mobility management function entity, or the tunnel information of the session management function entity.

Optionally, the second execution module 701 is further configured to: instruct the service quality information of the session to the access and mobility management function entity.

Optionally, the second execution module 701 is further configured to: instruct the tunnel information of the user plane function entity to the access and mobility management function entity.

Optionally, the second execution module 701 is further configured to: determine the session type to be control plane session according to the session context information of the user equipment.

Optionally, the second execution module 701 is further configured to: instruct the tunnel information of the user plane function entity corresponding to the session to the access and mobility management function entity.

Optionally, the second execution module 701 is further configured to: perform the data transmission with the user equipment through an NAS session management message.

Optionally, the second execution module 701 is further configured to: perform the data transmission with the user plane function entity through the tunnel information.

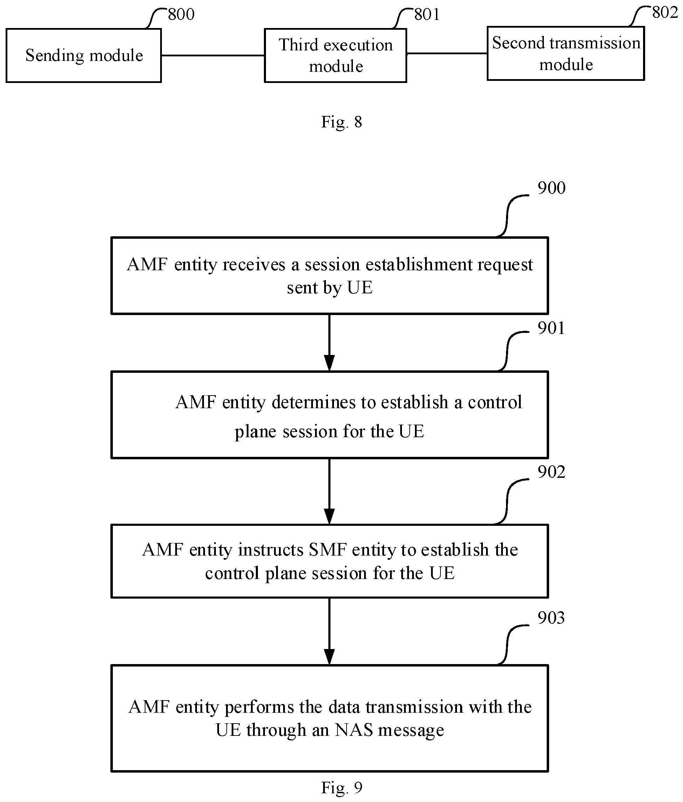

As shown in Fig. 8, an embodiment of the invention provides a user equipment for establishing a session, which includes: a sending module 800 configured to send a session establishment request to an access and mobility management function entity; a third execution module 801 configured to establish a control plane session with the access and mobility management function entity; and a second transmission module 802 configured to perform the data transmission with the access and mobility management function entity through the control plane session.

Optionally, the third execution module 801 is configured to: negotiate with the access and mobility management function entity to determine the session type to be control plane session in the registration process before sending the session establishment request message to the access and mobility management function entity.

Optionally, the sending module 800 is configured to: send an NAS confirmation message to the access and mobility management function entity after receiving an NAS response message sent by the access and mobility management function entity.

Optionally, the second transmission module 802 is configured to: perform the data transmission with the access and mobility management function entity through an NAS mobility management message.

Optionally, the second transmission module 802 is configured to: perform the data transmission with the access and mobility management function entity through an NAS session management message.

An embodiment of the invention provides a readable storage medium for establishing a session, including the program codes which are configured, when running on a computing device, to cause the computing device to perform steps of any method of the access and mobility management function entity or steps of any method of the session management function entity or steps of any method of the user equipment.

Based upon the same inventive concept, an embodiment of the invention further provides a method of the access and mobility management function entity for establishing the session. Since the device corresponding to this method is the access and mobility management function entity in the session establishment system in the embodiments of the invention, and the principle solving the problem of this method is similar to that of the device, the implementations of this method may refer to the implementations of the device, and the repeated description thereof will be omitted here.

As shown in Fig. 9, an embodiment of the invention provides a method of establishing the session by the access and mobility management function entity. The method includes the following steps.

Step 900: an access and mobility management function entity receives a session establishment request sent by a user equipment.

Step 901: the access and mobility management function entity determines to establish a control plane session for the user equipment.

Step 902: the access and mobility management function entity instructs a session management function entity to establish the control plane session for the user equipment.

Step 903: the access and mobility management function entity performs the data transmission with the user equipment through an NAS message.

According to the invention, the access and mobility management function entity determining to establish a control plane session for the user equipment includes: the access and mobility management function entity determining the session type to be control plane session by negotiating with the user equipment in the registration process.

Optionally, the access and mobility management function entity instructs a session management function entity to establish the control plane session for the user equipment, and the method further includes:
the access and mobility management function entity instructs the tunnel information of the access and mobility management function entity to the session management function entity.

Optionally, the access and mobility management function entity instructing the tunnel information of the access and mobility management function entity to the session management function entity includes: the tunnel information of the access and mobility management function entity is used by a user plane function entity to send the downlink data to the access and mobility management function entity.

Optionally, the access and mobility management function entity instructs a session management function entity to establish the control plane session for the user equipment, and the method further includes:
the access and mobility management function entity receives the tunnel information of the user plane function entity instructed by the session management function entity.

Optionally, the tunnel information of the user plane function entity is used by the access and mobility management function entity to send the uplink data to the user plane function entity.

Optionally, the access and mobility management function entity receives the tunnel information of a user plane function entity instructed by the session management function entity, and the method further includes:
the access and mobility management function entity receives the service quality information of the session instructed by the session management function entity.

Optionally, the access and mobility management function entity performing the data transmission with the user equipment through an NAS message includes: the access and mobility management function entity performs the data transmission with the user equipment through an NAS mobility management message.

Optionally, the access and mobility management function entity performs the data transmission with the user equipment through an NAS mobility management message, and the method further includes: the access and mobility management function entity performs the data transmission with the user plane function entity through the tunnel information.

Optionally, the access and mobility management function entity performs the data transmission with the user equipment through an NAS message, including: the access and mobility management function entity performs the data transmission with the user equipment through an NAS session management message.

Optionally, the access and mobility management function entity performs the data transmission with the user equipment through an NAS session management message, and the method further includes: the access and mobility management function entity performs the transmission of the NAS session management message with the session management function entity.

Based upon the same inventive concept, an embodiment of the invention further provides a method of the session management function entity for establishing the session. Since the device corresponding to this method is the session management function entity in the session establishment system in the embodiments of the invention, and the principle solving the problem of this method is similar to that of the device, the implementations of this method may refer to the implementations of the device, and the repeated description thereof will be omitted here.

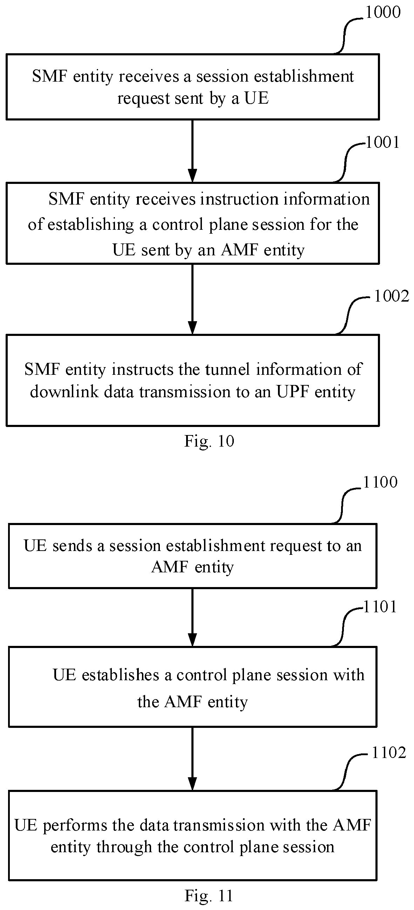

As shown in Fig. 10, an embodiment of the invention provides a method of the session management function entity for establishing the session.

Step 1000: a session management function entity receives a session establishment request sent by a user equipment.

Step 1001: the session management function entity receives the instruction information of establishing a control plane session for the user equipment sent by an access and mobility management function entity.

Step 1002: the session management function entity instructs the tunnel information of downlink data transmission to a user plane function entity.

Optionally, the session management function entity receives the instruction information of establishing a control plane session for the user equipment sent by an access and mobility management function entity, and the method further includes:
the session management function entity receives the tunnel information of the access and mobility management function entity sent by the access and mobility management function entity.

Optionally, the session management function entity instructs the tunnel information of downlink data transmission to a user plane function entity, including: the tunnel information of downlink data transmission is the tunnel information of the access and mobility management function entity, or the tunnel information of the session management function entity.

Optionally, the session management function entity receives the instruction information of establishing a control plane session for the user equipment sent by an access and mobility management function entity, and the method further includes: the session management function entity instructs the service quality information of the session to the access and mobility management function entity.

Optionally, the session management function entity receives the instruction information of establishing a control plane session for the user equipment sent by an access and mobility management function entity, and the method further includes: the session management function entity instructs the tunnel information of the user plane function entity to the access and mobility management function entity.

Optionally, the session management function entity receives the instruction information of establishing a control plane session for the user equipment sent by an access and mobility management function entity, and the method further includes: the session management function entity determines the session type to be control plane session according to the session context information of the user equipment.

Optionally, the session management function entity determines the session type to be control plane session, and the method further includes:
the session management function entity instructs the tunnel information of the user plane function entity corresponding to the session to the access and mobility management function entity.

Optionally, the session management function entity receives the instruction information of establishing a control plane session for the user equipment sent by an access and mobility management function entity, and the method further includes:
the session management function entity performs the data transmission with the user equipment through an NAS session management message.

Optionally, the session management function entity performs the data transmission with the user equipment through the NAS session management message, and the method further includes:
the session management function entity performs the data transmission with the user plane function entity through the tunnel information.

Based upon the same inventive concept, an embodiment of the invention further provides a method of the user equipment for establishing the session. Since the device corresponding to this method is the user equipment in the session establishment system in the embodiments of the invention, and the principle solving the problem of this method is similar to that of the device, the implementations of this method may refer to the implementations of the device, and the repeated description thereof will be omitted here.

As shown in Fig. 11, an embodiment of the invention provides a method of the user equipment for establishing the session.

Step 1100: a user equipment sends a session establishment request to an access and mobility management function entity.

Step 1101: the user equipment establishes a control plane session with the access and mobility management function entity.

Step 1102: the user equipment performs the data transmission with the access and mobility management function entity through the control plane session.

Optionally, before the user equipment sends the session establishment request to the access and mobility management function entity, the method includes:
the user equipment negotiates with the access and mobility management function entity to determine the session type to be control plane session in the registration process.

Optionally, the user equipment establishes a control plane session with the access and mobility management function entity, including:
the user equipment sends an NAS confirmation message to the access and mobility management function entity after receiving an NAS response message sent by the access and mobility management function entity.

Optionally, the user equipment performs the data transmission with the access and mobility management function entity through the control plane session, including:
the user equipment performs the data transmission with the access and mobility management function entity through an NAS mobility management message.

Optionally, the user equipment performs the data transmission with the access and mobility management function entity through the control plane session, including:
the user equipment performs the data transmission with the access and mobility management function entity through an NAS session management message.

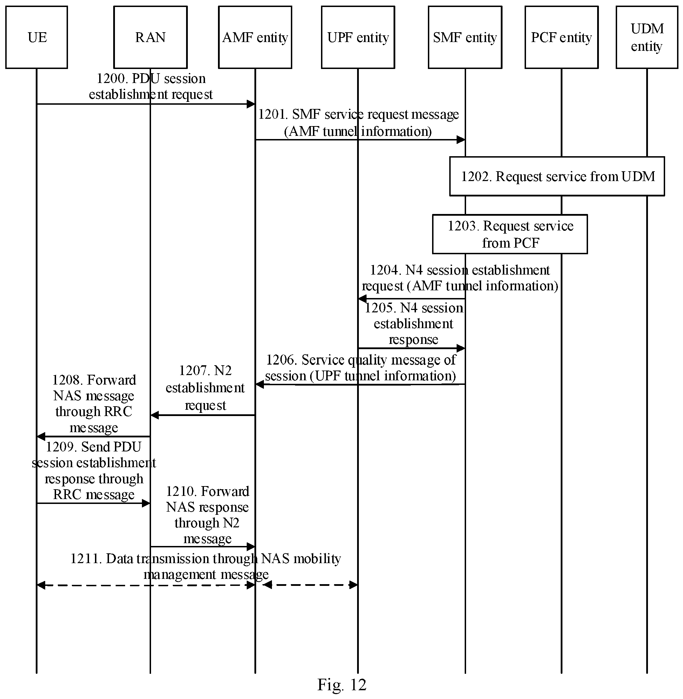

As shown in Fig. 12, an embodiment of the invention provides a complete flow chart of performing the data transmission between an access and mobility management function entity and a user equipment through an NAS mobility management message (in the following, the access and mobility management function entity is the AMF entity, the SMF entity is the session management function entity, and the UPF entity is the user plane function entity). The embodiment illustrated in Fig. 12 is not covered by the subject-matter of the claims.

Step 1200: the user equipment sends a PDU session establishment request to the AMF entity.

Step 1201: the AMF entity sends a service request message of the session management function (including the AMF tunnel information) (Nsmf_PDUSession_CreateSMRequest) to the session management function entity.

Step 1202: the SMF entity requests the service from the UDM.

Step 1203: the SMF entity requests the service from the PCF.

Step 1204: the SMF entity sends an N4 session establishment request (including the AMF tunnel information) (N4 Session Establishment) to the UPF entity.

Step 1205: the UPF entity returns an N4 session establishment response (N4 Session Estbl Resp) to the SMF entity.

Step 1206: the SMF entity returns the quality service message of the session (including the UPF tunnel information) (Nsmf_PDUSession_CreateSMContextResp) to the AMF entity.

Step 1207: the AMF entity sends an N2 establishment request (N2 msg) to the RAN entity.

Step 1208: the RAN entity forwards an NAS message to the user equipment through an RRC message (RRC msg).

Step 1209: the user equipment sends a PDU session establishment response to the RAN through an RRC message (RRC msg).

Step 1210: the RAN entity forwards an NAS response to the AMF entity through an N2 message (N2 msg).

Step 1211: perform the data transmission between the AMF and the user equipment through an NAS mobility management message after the establishment of the PDU session is completed.

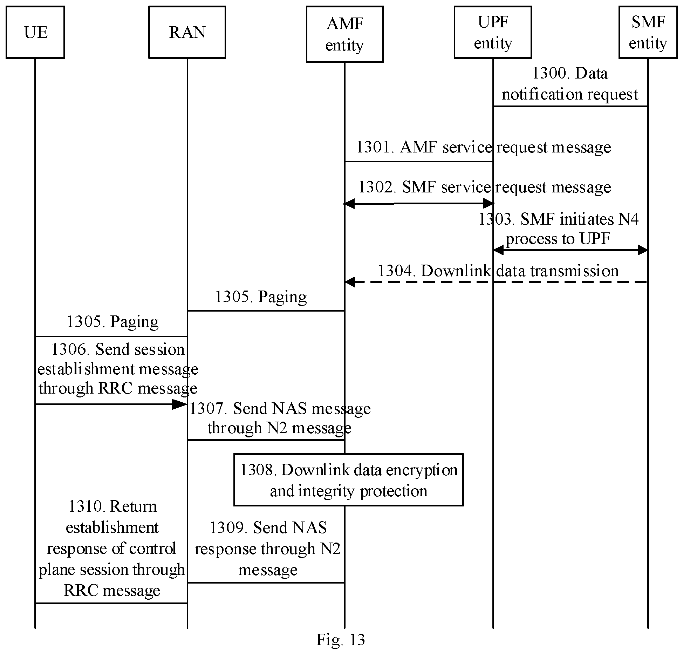

As shown in Fig. 13, an embodiment of the invention provides a complete flow chart of performing the downlink data transmission between an access and mobility management function entity and a user equipment (in the following, the access and mobility management function entity is the AMF entity, the SMF entity is the session management function entity, and the UPF entity is the user plane function entity). The embodiment illustrated in Fig. 13 is not covered by the subject-matter of the claims.

Step 1300: the UPF entity sends a data notification request (Data Notification) to the SMF entity.

Step 1301: the SMF entity sends an AMF service request message.

Step 1302: the AMF entity passes an SMF service request message.

Step 1303: the SMF entity initiates an N4 process (N4 Session Update) to the UPF entity.

Step 1304: the UPF entity sends the downlink data to the AMF (N4 Session Update).

Step 1305: the AMF entity initiates a paging (Paging) to the user equipment.

Step 1306: the user equipment sends a session establishment message to the RAN through an RRC message (RRC msg).

Step 1307: the RAN entity sends an NAS message to the AMF entity through an N2 message (N2 msg).

Step 1308: the AMF entity performs encryption and integrity protection on the downlink data.

Step 1309: the AMF entity sends an NAS response message (NAS msg) to the RAN entity through an N2 message.

Step 1310: the RAN entity returns an establishment response message of the control plane session to the user equipment through an RRC message (RRC Msg).

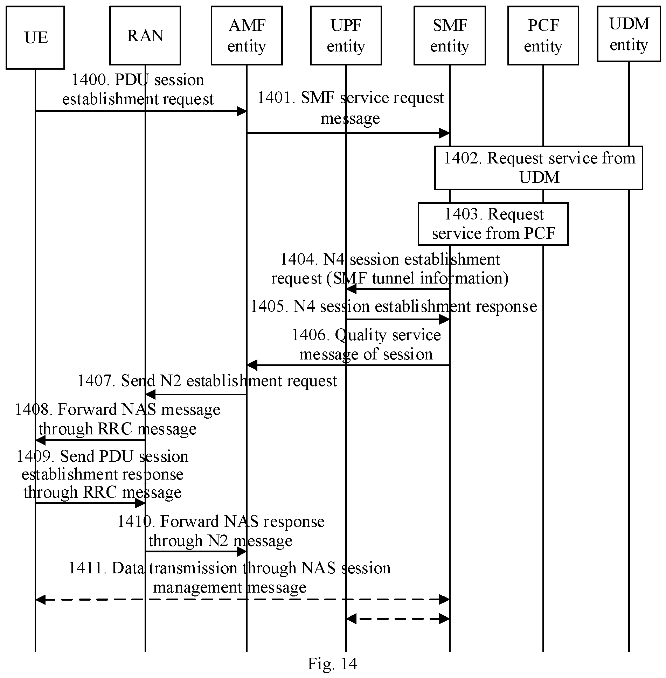

As shown in Fig. 14, an embodiment of the invention provides a complete flow chart of performing the data transmission between an access and mobility management function entity and a user equipment through an NAS session management message (in the following, the access and mobility management function entity is the AMF entity, the SMF entity is the session management function entity, and the UPF entity is the user plane function entity). The embodiment illustrated in Fig. 14 is not covered by the subject-matter of the claims.

Step 1400: the user equipment sends a PDU session establishment request to the AMF entity.

Step 1401: the AMF entity sends an SMF service request message (Nsmf_PDUSession_CreateSMRequest) to the SMF entity.

Step 1402: the SMF entity requests the service from the UDM.

Step 1403: the SMF entity requests the service from the PCF.

Step 1404: the SMF entity sends an N4 session establishment request (N4 Session Establishment (SMF tunnel information)) to the UPF entity.

Step 1405: the UPF entity returns an N4 session establishment response (N4 Session Estbl Resp) to the SMF entity.

Step 1406: the SMF entity sends the quality service message of the session (Nsmf_PDUSession_CreateSMContextResp) to the AMF entity.

Step 1407: the AMF entity sends an N2 establishment request (N2 msg) to the RNA entity.

Step 1408: the RAN entity forwards an NAS message to the user equipment through an RRC message (RRC msg).

Step 1409: the user equipment sends a PDU session establishment response to the RAN through an RRC message (RRC msg).

Step 1410: the RAN entity forwards an NAS response to the AMF entity through an N2 message (N2 msg).

Step 1411: perform the data transmission between the AMF and the user equipment through an NAS session management message after the establishment of the PDU session is completed.

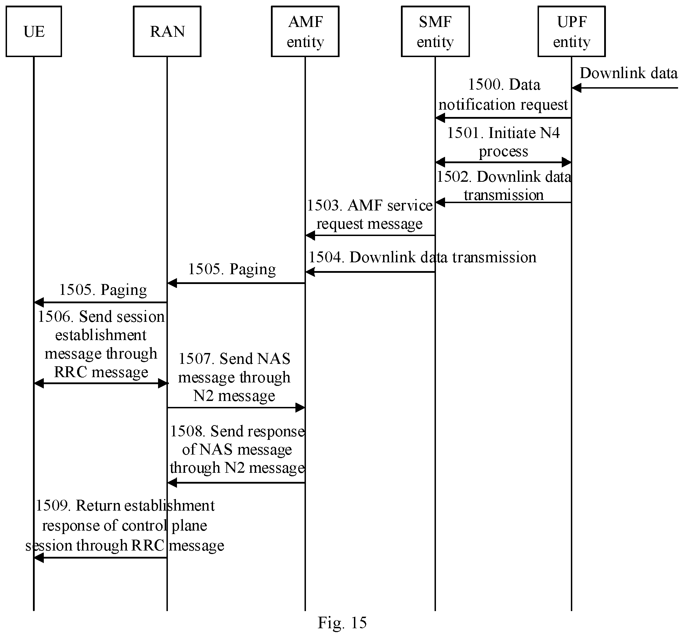

As shown in Fig. 15, an embodiment of the invention provides a complete flow chart of performing the downlink data transmission among an access and mobility management function entity, a session management function entity and a user equipment (in the following, the access and mobility management function entity is the AMF entity, the SMF entity is the session management function entity, and the UPF entity is the user plane function entity). The embodiment illustrated in Fig. 15 is not covered by the subject-matter of the claims.

Step 1500: the UPF entity sends a data notification request (Data Notification) to the SMF entity.

Step 1501: the SMF entity initiates an N4 process (N4 Session Update) to the UPF entity.

Step 1502: the UPF entity sends the downlink data (DL data) to the SMF entity.

Step 1503: the SMF entity sends an AMF service request message (Nsmf_DataTransReq/Resp (N1 SM)).

Step 1504: the SMF entity sends the downlink data (DL data) to the AMF entity.

Step 1505: the AMF entity initiates a paging (Paging) to the user equipment.

Step 1506: the user equipment sends a session establishment message to the RAN through an RRC message (RRC msg).

Step 1507: the RAN entity sends an NAS message to the AMF entity through an N2 message (N2 msg).

Step 1508: the AMF entity sends a response of the NAS message (NAS msg) to the RAN entity through an N2 message.

Step 1509: the RAN entity returns an establishment response of the control plane session through an RRC message (RRC Msg).

The present application has been described above by reference to the block diagrams and/or flow charts showing the methods, devices (systems) and/or computer program products according to the embodiments of the present application. It should be understood that one block shown in the block diagrams and/or flow charts and a combination of the blocks shown in the block diagrams and/or flow charts can be implemented by the computer program instructions. These computer program instructions can be provided to a general-purpose computer, a processor of a dedicated computer and/or another programmable data processing unit to produce a machine, so that the instructions executed by the computer processor and/or another programmable data processing unit create the methods for implementing the functions and/or actions specified in the blocks of the block diagrams and/or flow charts.

Accordingly, the present application can also be implemented by the hardware and/or software (including the firmware, resident software, microcode and the like). Further, the present application can adopt the form of computer program products on the computer usable or computer readable storage medium, which has the computer usable or computer readable program codes implemented in the medium, to be used by the instruction execution system or used in combination with the instruction execution system. In the context of the present application, the computer usable or computer readable storage medium can be any medium, which can contain, store, communicate with, transmit or transfer the programs, to be used by the instruction execution system, apparatus or device, or used in combination with the instruction execution system, apparatus or device.

## Claims

1. A method for establishing a session, comprising:
receiving (900), by an access and mobility management function entity (100), a session establishment request sent by a user equipment (102), and sending the session establishment request to a session management function entity (101);
determining, by the access and mobility management function entity (100), that a type of the session to be established for the user equipment (102) is a control plane session according to a negotiation result with the user equipment (102) in a registration process of the user equipment (102); wherein the negotiation result is Control Plane CIoT EPS optimisation;
instructing (902), by the access and mobility management function entity (100), the session management function entity (101) to establish the control plane session for the user equipment (102); and
performing (903), by the access and mobility management function entity (100), control plane data transmission with the user equipment (102) through the control plane session and through a Non Access Stratum, NAS, message.

2. The method of claim 1, further comprising:
instructing, by the access and mobility management function entity (100), tunnel information of the access and mobility management function entity (100) to the session management function entity (101);
wherein the tunnel information of the access and mobility management function entity (100) is used by a user plane function entity to send downlink data to the access and mobility management function entity (100).

3. The method of claim 1, further comprising:
receiving, by the access and mobility management function entity (100), tunnel information of a user plane function entity instructed by the session management function entity (101);
wherein the tunnel information of the user plane function entity is used by the access and mobility management function entity (100) to send uplink data to the user plane function entity.

4. The method of claim 3, further comprising:
receiving, by the access and mobility management function entity (100), service quality information of the session instructed by the session management function entity (101).

5. The method of claim 1, wherein performing, by the access and mobility management function entity (100), control plane data transmission with the user equipment (102) through the NAS message, comprises:
performing, by the access and mobility management function entity (100), control plane data transmission with the user equipment (102) through an NAS mobility management message; and
the method further comprising:
performing, by the access and mobility management function entity (100), control plane data transmission with a user plane function entity through a tunnel.

6. The method of claim 1, wherein performing, by the access and mobility management function entity (100), control plane data transmission with the user equipment (102) through the NAS message, comprises:
performing, by the access and mobility management function entity (100), control plane data transmission with the user equipment (102) through an NAS session management message; and
the method further comprising:
performing, by the access and mobility management function entity (100), transmission of the NAS session management message with the session management function entity (101).

7. A method for establishing a session, comprising:
receiving (1000), by a session management function entity (101), a session establishment request sent by a user equipment (102) forwarded by an access and mobility management function entity (100);
receiving (1001), by the session management function entity (101), instruction information of establishing a control plane session for the user equipment (102) sent by the access and mobility management function entity (100), wherein the instruction information is information sent by the access and mobility management function entity (100) after determining that a type of the session to be established for the user equipment (102) is a control plane session according to a negotiation result with the user equipment (102) in a registration process of the user equipment (102), wherein the negotiation result is Control Plane CIoT EPS optimization;
instructing (1002), by the session management function entity (101), tunnel information of downlink control plane data transmission to a user plane function entity based on the receiving the instruction information of establishing a control plane session for the user equipment (102).

8. The method of claim 7, wherein the tunnel information of downlink control plane data transmission is tunnel information of the access and mobility management function entity (100); or tunnel information of the session management function entity (101).

9. The method of claim 7 further comprising:
determining, by the session management function entity (101), a session type to be control plane session according to session context information of the user equipment (102).

10. The method of claim 7, further comprising:
performing, by the session management function entity (101), control plane data transmission with the user equipment (102) through a Non Access Stratum, NAS, session management message; and
performing, by the session management function entity (101), control plane data transmission with the user plane function entity through tunnel information.

11. A method for establishing a session, comprising:
sending (1100), by a user equipment (102), a session establishment request to an access and mobility management function entity (100);
establishing (1101), by the user equipment (102), a control plane session with the access and mobility management function entity (100);
performing (1102), by the user equipment (102), control plane data transmission with the access and mobility management function entity (100) through the control plane session and through a Non Access Stratum, NAS, message.

12. An access and mobility management function entity (100) for establishing a session, comprising:
a first receiving module (600) configured to receive a session establishment request sent by a user equipment (102);
a first execution module (601) configured to determine that a type of the session to be established for the user equipment (102) is a control plane session according to a negotiation result with the user equipment (102) in a registration process of the user equipment (102), wherein the negotiation result is Control Plane CIoT EPS optimisation, and instruct a session management function entity (101) to establish the control plane session for the user equipment (102);
a transmission module (602) configured to send the session establishment request to the session management function entity, and perform control plane data transmission with the user equipment (102) through the control plane session and through a Non Access Stratum, NAS, message.

13. A session management function entity (101) for establishing a session, comprising:
a second receiving module (700) configured to receive a session establishment request sent by a user equipment (102) forwarded by an access and mobility management function entity (100), and receive instruction information of establishing a control plane session for the user equipment (102) sent by the access and mobility management function entity (100), wherein the instruction information is information sent by the access and mobility management function entity (100) after determining that a type of the session to be established for the user equipment (102) is a control plane session according to a negotiation result with the user equipment (102) in a registration process of the user equipment (102), wherein the negotiation result is Control Plane CIoT EPS optimization;
a second execution module (701) configured to instruct tunnel information of downlink control plane data transmission to a user plane function entity (100) based on the received instruction information of establishing a control plane session for the user equipment (102).

14. A user equipment (102) for establishing a session, comprising:
a sending module (800) configured to send a session establishment request to an access and mobility management function entity (100);
a third execution module (801) configured to establish a control plane session with the access and mobility management function entity (100);
a second transmission module (802) configured to perform control plane data transmission with the access and mobility management function entity (100) through the control plane session and through a Non Access Stratum, NAS, message.

## Patentansprüche

1. Verfahren zum Einrichten einer Sitzung, umfassend:
Empfangen (900), in einer Zugangs- und Mobilitätsverwaltungsfunktionseinrichtung (100), einer Sitzungseinrichtungsanforderung, die von einem Benutzergerät (102) gesendet wird, und Senden der Sitzungseinrichtungsanforderung zu einer Sitzungsverwaltungsfunktionseinrichtung (101);
Ermitteln, durch die Zugangs- und Mobilitätsverwaltungsfunktionseinrichtung (100), dass ein Typ der für das Benutzergerät (102) einzurichtenden Sitzung eine Steuerebenensitzung gemäß einem Verhandlungsergebnis mit dem Benutzergerät (102) in einem Registrierungsprozess des Benutzergeräts (102) ist, wobei das Verhandlungsergebnis eine Steuerebenen-CIoT-EPS-Optimierung ist;
Anweisen (902), durch die Zugangs- und Mobilitätsverwaltungsfunktionseinrichtung (100), der Sitzungsverwaltungsfunktionseinrichtung (101), um die Steuerebenensitzung für das Benutzergerät (102) einzurichten; und
Durchführen (903), durch die Zugangs- und Mobilitätsverwaltungsfunktionseinrichtung (100), einer Datenübertragung der Steuerebene mit dem Benutzergerät (102) durch die Steuerebenensitzung und durch eine Nachricht einer Nichtzugangsebene (Non Access Stratum message, NAS-Nachricht).

2. Verfahren nach Anspruch 1, das außerdem umfasst:
Zuweisen, durch die Zugangs- und Mobilitätsverwaltungsfunktionseinrichtung (100), von Tunnelinformationen der Zugangs- und Mobilitätsverwaltungsfunktionseinrichtung (100) für die Sitzungsverwaltungsfunktionseinrichtung (101);
wobei die Tunnelinformationen der Zugangs- und Mobilitätsverwaltungsfunktionseinrichtung (100) von einer Benutzerebenenfunktionseinrichtung verwendet werden, um Downlink-Daten zu der Zugangs- und Mobilitätsverwaltungsfunktionseinrichtung (100) zu senden.

3. Verfahren nach Anspruch 1, das außerdem umfasst:
Empfangen, in der Zugangs- und Mobilitätsverwaltungsfunktionseinrichtung (100), von Tunnelinformationen einer Benutzerebenenfunktionseinrichtung, die durch die Sitzungsverwaltungsfunktionseinrichtung (101) angewiesen wurden;
wobei die Tunnelinformationen der Benutzerebenenfunktionseinrichtung von der Zugangs- und Mobilitätsverwaltungsfunktionseinrichtung (100) verwendet werden, um Uplink-Daten zu der Benutzerebenenfunktionseinrichtung zu senden.

4. Verfahren nach Anspruch 3, das außerdem umfasst:
Empfangen, in der Zugangs- und Mobilitätsverwaltungsfunktionseinrichtung (100), von Dienstgüteinformationen der Sitzung, die durch die Sitzungsverwaltungsfunktionseinrichtung (101) angewiesen wurde.

5. Verfahren nach Anspruch 1, wobei das Durchführen, durch die Zugangs- und Mobilitätsverwaltungsfunktionseinrichtung (100), einer Datenübertragung der Steuerebene mit dem Benutzergerät (102) durch die NAS-Nachricht umfasst:
Durchführen, durch die Zugangs- und Mobilitätsverwaltungsfunktionseinrichtung (100), einer Datenübertragung der Steuerebene mit dem Benutzergerät (102) durch eine NAS-Mobilitätsverwaltungsnachricht; und
wobei das Verfahren außerdem umfasst:
Durchführen, durch die Zugangs- und Mobilitätsverwaltungsfunktionseinrichtung (100), einer Datenübertragung der Steuerebene mit einer Benutzerebenenfunktionseinrichtung durch einen Tunnel.

6. Verfahren nach Anspruch 1, wobei das Durchführen, durch die Zugangs- und Mobilitätsverwaltungsfunktionseinrichtung (100), einer Datenübertragung der Steuerebene mit dem Benutzergerät (102) durch die NAS-Nachricht umfasst:
Durchführen, durch die Zugangs- und Mobilitätsverwaltungsfunktionseinrichtung (100), einer Datenübertragung der Steuerebene mit dem Benutzergerät (102) durch eine NAS-Sitzungsverwaltungsnachricht; und
wobei das Verfahren außerdem umfasst:
Durchführen, durch die Zugangs- und Mobilitätsverwaltungsfunktionseinrichtung (100), einer Übertragung der NAS-Sitzungsverwaltungsnachricht mit der Sitzungsverwaltungsfunktionseinrichtung (101).

7. Verfahren zum Einrichten einer Sitzung, umfassend:
Empfangen (1000), in einer Sitzungsverwaltungsfunktionseinrichtung (101), einer Sitzungseinrichtungsanforderung, die von einem Benutzergerät (102) gesendet wird und von einer Zugangs- und Mobilitätsverwaltungsfunktionseinrichtung (100) weitergeleitet wird;
Empfangen (1001), in der Sitzungsverwaltungsfunktionseinrichtung (101), von Anweisungsinformationen zum Einrichten einer Steuerebenensitzung für das Benutzergerät (102), die von der Zugangs- und Mobilitätsverwaltungsfunktionseinrichtung (100) gesendet wird, wobei die Anweisungsinformationen Informationen sind, die durch die Zugangs- und Mobilitätsverwaltungsfunktionseinrichtung (100) gesendet werden, nachdem ermittelt wurde, dass ein Typ der für das Benutzergerät (102) einzurichtenden Sitzung eine Steuerebenensitzung gemäß einem Verhandlungsergebnis mit dem Benutzergerät (102) in einem Registrierungsprozess des Benutzergeräts (102) ist, wobei das Verhandlungsergebnis eine Steuerebenen-CIoT-EPS-Optimierung ist;
Zuweisen (1002), durch die Sitzungsverwaltungsfunktionseinrichtung (101), von Tunnelinformationen einer Datenübertragung einer Downlink-Steuerebene für eine Benutzerebenenfunktionseinrichtung basierend auf dem Empfangen der Anweisungsinformationen zum Einrichten einer Steuerebenensitzung für das Benutzergerät (102).

8. Verfahren nach Anspruch 7, wobei die Tunnelinformationen einer Datenübertragung einer Downlink-Steuerebene Tunnelinformationen der Zugangs- und Mobilitätsverwaltungsfunktionseinrichtung (100) sind oder Tunnelinformationen der Sitzungsverwaltungsfunktionseinrichtung (101) sind.

9. Verfahren nach Anspruch 7, das außerdem umfasst:
Ermitteln, durch die Sitzungsverwaltungsfunktionseinrichtung (101), eines Sitzungstyps für die Steuerebenensitzung gemäß Sitzungskontextinformationen des Benutzergeräts (102).

10. Verfahren nach Anspruch 7, das außerdem umfasst:
Durchführen, durch die Sitzungsverwaltungsfunktionseinrichtung (101), einer Datenübertragung der Steuerebene mit dem Benutzergerät (102) durch eine Nachricht einer Nichtzugangsebene (Non Access Stratum message, NAS-Nachricht); und
Durchführen, durch die Sitzungsverwaltungsfunktionseinrichtung (101), einer Datenübertragung der Steuerebene mit der Benutzerebenenfunktionseinrichtung durch die Tunnelinformationen.

11. Verfahren zum Einrichten einer Sitzung, umfassend:
Senden (1100) einer Sitzungseinrichtungsanforderung von einem Benutzergerät (102) zu einer Zugangs- und Mobilitätsverwaltungsfunktionseinrichtung (100);
Einrichten (1101), durch das Benutzergerät (102), einer Steuerebenensitzung mit der Zugangs- und Mobilitätsverwaltungsfunktionseinrichtung (100);
Durchführen (1102), durch das Benutzergerät (102), einer Datenübertragung einer Steuerebene mit der Zugangs- und Mobilitätsverwaltungsfunktionseinrichtung (100) durch die Steuerebenensitzung und durch eine Nachricht einer Nichtzugangsebene (Non Access Stratum message, NAS-Nachricht).

12. Zugangs- und Mobilitätsverwaltungsfunktionseinrichtung (100) zum Einrichten einer Sitzung, umfassend:
ein erstes Empfangsmodul (600), das konfiguriert ist zum Empfangen einer Sitzungseinrichtungsanforderung, die von einem Benutzergerät (102) gesendet wird,
ein erstes Ausführungsmodul (601), das konfiguriert ist zum Ermitteln, dass ein Typ der für das Benutzergerät (102) einzurichtenden Sitzung eine Steuerebenensitzung gemäß einem Verhandlungsergebnis mit dem Benutzergerät (102) in einem Registrierungsprozess des Benutzergeräts (102) ist, wobei das Verhandlungsergebnis eine Steuerebenen-CIoT-EPS-Optimierung ist, und Anweisen einer Sitzungsverwaltungsfunktionseinrichtung (101), um die Steuerebenensitzung für das Benutzergerät (102) einzurichten;
ein Übertragungsmodul (602), das konfiguriert ist zum Senden der Sitzungseinrichtungsanforderung zu der Sitzungsverwaltungsfunktionseinrichtung, und Durchführen einer Datenübertragung der Steuerebene mit dem Benutzergerät (102) durch die Steuerebenensitzung und durch eine Nachricht einer Nichtzugangsebene (Non Access Stratum message, NAS-Nachricht).

13. Sitzungsverwaltungsfunktionseinrichtung (101) zum Einrichten einer Sitzung, umfassend:
ein zweites Empfangsmodul (700), das konfiguriert ist zum Empfangen einer Sitzungseinrichtungsanforderung, die von einem Benutzergerät (102) gesendet wird und von einer Zugangs- und Mobilitätsverwaltungsfunktionseinrichtung (100) weitergeleitet wird, und Empfangen von Anweisungsinformationen zum Einrichten einer Steuerebenensitzung für das Benutzergerät (102), die von der Zugangs- und Mobilitätsverwaltungsfunktionseinrichtung (100) gesendet werden, wobei die Anweisungsinformationen Informationen sind, die durch die Zugangs- und Mobilitätsverwaltungsfunktionseinrichtung (100) gesendet werden, nachdem ermittelt wurde, dass ein Typ der für das Benutzergerät (102) einzurichtenden Sitzung eine Steuerebenensitzung gemäß einem Verhandlungsergebnis mit dem Benutzergerät (102) in einem Registrierungsprozess des Benutzergeräts (102) ist, wobei das Verhandlungsergebnis eine Steuerebenen-CIoT-EPS-Optimierung ist;
ein zweites Ausführungsmodul (701), das konfiguriert ist zum Zuweisen von Tunnelinformationen einer Datenübertragung einer Downlink-Steuerebene für eine Benutzerebenenfunktionseinrichtung (100) basierend auf den empfangenen Anweisungsinformationen zum Einrichten einer Steuerebenensitzung für das Benutzergerät (102).

14. Benutzergerät (102) zum Einrichten einer Sitzung, umfassend:
ein Sendemodul (800), das konfiguriert ist zum Senden einer Sitzungseinrichtungsanforderung zu einer Zugangs- und Mobilitätsverwaltungsfunktionseinrichtung (100) ;
ein drittes Ausführungsmodul (801), das konfiguriert ist zum Einrichten einer Steuerebenensitzung mit der Zugangs- und Mobilitätsverwaltungsfunktionseinrichtung (100) ;
ein zweites Übertragungsmodul (802), das konfiguriert ist zum Durchführen einer Datenübertragung einer Steuerebene mit der Zugangs- und Mobilitätsverwaltungsfunktionseinrichtung (100) durch die Steuerebenensitzung und durch eine Nachricht einer Nichtzugangsebene (Non Access Stratum message, NAS-Nachricht).

## Revendications

1. Procédé destiné à établir une session, comprenant :
la réception (900), par une entité à fonction de gestion d'accès et de mobilité (100), d'une requête d'établissement de session envoyée par un équipement utilisateur (102), et l'envoi de la requête d'établissement de session à une entité à fonction de gestion de session (101) ;
la détermination, par l'entité à fonction de gestion d'accès et de mobilité (100), qu'un type de la session à établir pour l'équipement utilisateur (102) est une session de plan de contrôle en fonction d'un résultat de négociation avec l'équipement utilisateur (102) dans un processus d'enregistrement de l'équipement utilisateur (102), le résultat de la négociation étant une optimisation du plan de contrôle CIoT EPS ;
l'instruction (902), par l'entité à fonction de gestion d'accès et de mobilité (100), à l'entité à fonction de gestion de session (101) d'établir la session de plan de contrôle pour l'équipement utilisateur (102) ; et
la réalisation (903), par l'entité à fonction de gestion d'accès et de mobilité (100), de la transmission de données de plan de contrôle avec l'équipement utilisateur (102) par la session de plan de contrôle et par un message de strate de non-accès, NAS.

2. Procédé de la revendication 1, comprenant en outre :
l'indication, par l'entité à fonction de gestion d'accès et de mobilité (100), d'informations de tunnel de l'entité à fonction de gestion d'accès et de mobilité (100) à l'entité à fonction de gestion de session (101) ;
dans lequel les informations de tunnel de l'entité à fonction de gestion d'accès et de mobilité (100) sont utilisées par une entité à fonction de plan utilisateur pour envoyer des données en liaison descendante à l'entité à fonction de gestion d'accès et de mobilité (100).

3. Procédé de la revendication 1, comprenant en outre :
la réception, par l'entité à fonction de gestion d'accès et de mobilité (100), d'informations de tunnel d'une entité à fonction de plan utilisateur indiquées par l'entité à fonction de gestion de session (101) ;
dans lequel les informations de tunnel de l'entité à fonction de plan utilisateur sont utilisées par l'entité à fonction de gestion d'accès et de mobilité (100) pour envoyer des données en liaison montante à l'entité à fonction de plan utilisateur.

4. Procédé de la revendication 3, comprenant en outre :
la réception, par l'entité à fonction de gestion d'accès et de mobilité (100), d'informations de qualité de service de la session indiquées par l'entité à fonction de gestion de session (101).

5. Procédé de la revendication 1, dans lequel la réalisation, par l'entité à fonction de gestion d'accès et de mobilité (100), de la transmission de données de plan de contrôle avec l'équipement utilisateur (102) par le message NAS comprend :
la réalisation, par l'entité à fonction de gestion d'accès et de mobilité (100), de la transmission de données de plan de contrôle avec l'équipement utilisateur (102) par un message de gestion de mobilité NAS ; et
le procédé comprenant en outre :
la réalisation, par l'entité à fonction de gestion d'accès et de mobilité (100), de la transmission de données de plan de contrôle avec une entité à fonction de plan utilisateur par un tunnel.

6. Procédé de la revendication 1, dans lequel la réalisation, par l'entité à fonction de gestion d'accès et de mobilité (100), de la transmission de données de plan de contrôle avec l'équipement utilisateur (102) par le message NAS comprend :
la réalisation, par l'entité à fonction de gestion d'accès et de mobilité (100), de la transmission de données de plan de contrôle avec l'équipement utilisateur (102) par un message de gestion de session NAS ; et
le procédé comprenant en outre :
la réalisation, par l'entité à fonction de gestion d'accès et de mobilité (100), de la transmission d'un message de gestion de session NAS avec l'entité à fonction de gestion de session (101).

7. Procédé destiné à établir une session, comprenant :
la réception (1000), par une entité à fonction de gestion de session (101), d'une requête d'établissement de session envoyée par un équipement utilisateur (102) transférée par une entité à fonction de gestion d'accès et de mobilité (100) ;
la réception (1001), par l'entité à fonction de gestion de session (101), d'informations d'instruction d'établissement d'une session de plan de contrôle pour l'équipement utilisateur (102) envoyées par l'entité à fonction de gestion d'accès et de mobilité (100), les informations d'instruction étant des informations envoyées par l'entité à fonction de gestion d'accès et de mobilité (100) après détermination qu'un type de la session à établir pour l'équipement utilisateur (102) est une session de plan de contrôle en fonction d'un résultat de négociation avec l'équipement utilisateur (102) dans un processus d'enregistrement de l'équipement utilisateur (102), le résultat de la négociation étant une optimisation du plan de contrôle CIoT EPS ;
l'indication (1002), par l'entité à fonction de gestion de session (101), d'informations de tunnel de transmission de données de plan de contrôle en liaison descendante à une entité à fonction de plan utilisateur sur la base de la réception des informations d'instruction d'établissement d'une session de plan de contrôle pour l'équipement utilisateur (102).

8. Procédé de la revendication 7, dans lequel les informations de tunnel de transmission de données de plan de contrôle en liaison descendante sont des informations de tunnel de l'entité à fonction de gestion d'accès et de mobilité (100), ou des informations de tunnel de l'entité à fonction de gestion de session (101).

9. Procédé de la revendication 7 comprenant en outre :
la détermination, par l'entité à fonction de gestion de session (101), qu'un type de session soit une session de plan de contrôle en fonction d'informations de contexte de session de l'équipement utilisateur (102).

10. Procédé de la revendication 7 comprenant en outre :
la réalisation, par l'entité à fonction de gestion de session (101), de la transmission de données de plan de contrôle avec l'équipement utilisateur (102) par un message de gestion de session de strate de non-accès, NAS ; et
la réalisation, par l'entité à fonction de gestion de session (101), de la transmission de données de plan de contrôle avec l'entité à fonction de plan utilisateur par des informations de tunnel.

11. Procédé destiné à établir une session, comprenant :
l'envoi (1100), par un équipement utilisateur (102), d'une requête d'établissement de session à une entité à fonction de gestion d'accès et de mobilité (100) ;
l'établissement (1101), par l'équipement utilisateur (102), d'une session de plan de contrôle avec l'entité à fonction de gestion d'accès et de mobilité (100) ;
la réalisation (1102), par l'équipement utilisateur (102), de la transmission de données de plan de contrôle avec l'entité à fonction de gestion d'accès et de mobilité (100) par la session de plan de contrôle et par un message de strate de non-accès, NAS.

12. Entité à fonction de gestion d'accès et de mobilité (100) destinée à établir une session, comprenant :
un premier module de réception (600) configuré pour recevoir une requête d'établissement de session envoyée par un équipement utilisateur (102) ;
un premier module d'exécution (601) configuré pour déterminer qu'un type de la session à établir pour l'équipement utilisateur (102) est une session de plan de contrôle en fonction d'un résultat de négociation avec l'équipement utilisateur (102) dans un processus d'enregistrement de l'équipement utilisateur (102), le résultat de la négociation étant une optimisation du plan de contrôle CIoT EPS, et donner l'instruction à une entité à fonction de gestion de session (101) d'établir la session de plan de contrôle pour l'équipement utilisateur (102) ;
un module de transmission (602) configuré pour envoyer la requête d'établissement de session à l'entité à fonction de gestion de session, et réaliser la transmission de données de plan de contrôle avec l'équipement utilisateur (102) par la session de plan de contrôle et par un message de strate de non-accès, NAS.

13. Entité à fonction de gestion de session (101) destinée à établir une session, comprenant :
un deuxième module de réception (700) configuré pour recevoir une requête d'établissement de session envoyée par un équipement utilisateur (102) transférée par une entité à fonction de gestion d'accès et de mobilité (100), et recevoir des informations d'instruction d'établissement d'une session de plan de contrôle pour l'équipement utilisateur (102) envoyées par l'entité à fonction de gestion d'accès et de mobilité (100), les informations d'instruction étant des informations envoyées par l'entité à fonction de gestion d'accès et de mobilité (100) après détermination qu'un type de la session à établir pour l'équipement utilisateur (102) est une session de plan de contrôle en fonction d'un résultat de négociation avec l'équipement utilisateur (102) dans un processus d'enregistrement de l'équipement utilisateur (102), le résultat de la négociation étant une optimisation du plan de contrôle CIoT EPS ;
un deuxième module d'exécution (701) configuré pour indiquer des informations de tunnel de transmission de données de plan de contrôle en liaison descendante à une entité à fonction de plan utilisateur (100) sur la base des informations d'instruction reçues d'établissement de session de plan de contrôle pour l'équipement utilisateur (102).

14. Équipement utilisateur (102) destiné à établir une session, comprenant :
un module d'envoi (800) configuré pour envoyer une requête d'établissement de session à une entité à fonction de gestion d'accès et de mobilité (100) ;
un troisième module d'exécution (801) configuré pour établir une session de plan de contrôle avec l'entité à fonction de gestion d'accès et de mobilité (100) ;
un deuxième module de transmission (802) configuré pour réaliser la transmission de données de plan de contrôle avec l'entité à fonction de gestion d'accès et de mobilité (100) par la session de plan de contrôle et par un message de strate de non-accès, NAS.
